# FASCICULE DE BREVET EUROPEEN

(11) **EP 1 253 443 B1**
(45) Date de publication et mention de la délivrance du brevet: **26.10.2005**
(21) Numéro de dépôt: 02290976.6
(22) Date de dépôt: 17.04.2002
(51) Int. Cl.: G01V 1/28, G01V 1/30

(54) **Méthode pour faciliter le suivi au cours du temps de l'évolution d'une zone souterraine par analyse comparée de differents jeux d'enregistrements sismiques**
Verfahren zur Erleichterung der Zeitüberwachung der Evolution eines unterirdischen Gebiets mit einer vergleichenden Auswertung von verschiedenen seismischen Datensätzen
Method of facilitating the time monitoring of the evolution of an underground zone with a comparative analysis of different sets of seismic recordings

(30) Priorité: 27.04.2001 FR 0105675
(43) Date de publication de la demande: 30.10.2002
(73) Titulaire: Institut Français du Pétrole, 92852 Rueil-Malmaison Cedex (FR)
(72) Inventeur: Fournier, Frédérique, 95240 Cormeilles en Parisisis (FR); Lucet, Nathalie, 78800 Houilles (FR)

(56) Documents cités:
- FR-A- 2 768 818
- US-A- 5 444 619
- DUMAY J ET AL: "Multivariate statistical analyses applied to seismic facies recognition" GEOPHYSICS, SEPT. 1988, USA, vol. 53, no. 9, pages 1151-1159, XP002187537 ISSN: 0016-8033
- SONNELAND LARS ET AL: "Seismic reservoir monitoring on Gullfaks" LEADING EDGE;LEADING EDGE (TULSA, OK) SEP 1997 SOC OF EXPLORATION GEOPHYSICISTS, TULSA, OK, USA, vol. 16, no. 9, septembre 1997 (1997-09), pages 1247-1252, XP002187538
- FOURNIER F ET AL: "A STATISTICAL METHODOLOGY FOR DERIVING RESERVOIR PROPERTIES FROM SEISMIC DATA" GEOPHYSICS, SOCIETY OF EXPLORATION GEOPHYSICISTS. TULSA, US, vol. 60, no. 5, 1 septembre 1995 (1995-09-01), pages 1437-1450, XP002070858 ISSN: 0016-8033
- BURNS C SCOTT: "4D seismic interpretive processing: Optimizing differential imaging for reservoir monitoring" PROCEEDINGS OF THE 1998 EUROPEAN PETROLEUM CONFERENCE, EUROPEC. PART 2 (OF 2);HAGUE, NETH OCT 20-22 1998, vol. 2, 1998, pages 329-343, XP002187539 Richardson, TX, USA

## Description

La présente invention concerne une méthode pour faciliter le suivi au cours du temps de l'évolution d'événements sismiques dans une zone d'intérêt d'une formation souterraine (une zone réservoir par exemple), par analyse comparée d'un certain nombre n de jeux d'enregistrements sismiques obtenus respectivement à l'issue de campagnes sismiques 3D successives (sismique dite 4D). Il s'agit d'étudier et d'interpréter les évolutions des enregistrements sismiques qui sont liées aux évolutions des propriétés physiques de la zone, suite aux mécanismes de production par exemple.

Par événements sismiques, on entend des portions de trace sismique prélevées au niveau de la zone d'intérêt sur les jeux successifs d'enregistrements ou traces. Les événements sismiques que l'on cherche à classer sont caractérisés par des attributs ou paramètres sismiques. Ces attributs peuvent être de différents types. Il peut s'agir par exemple de la succession des amplitudes de portions de traces sismiques (contenues dans la fenêtre sismique étudiée).

### Etat de la technique

Les mesures sismiques sont classiquement utilisées pour fournir des informations complémentaires, par rapport aux données des forages, sur les variations des formations du sous-sol : variations lithologiques, pétrophysiques, ou de saturations en fluide. En particulier, dans le cadre de la production des réservoirs d'hydrocarbures, il est devenu fréquent de répéter l'enregistrement des mesures sismiques et d'interpréter alors les variations de la mesure sismique en liaison avec les variations de saturation et de pression consécutives aux phénomènes de production du réservoir.

Une technique classique d'utilisation de ces enregistrements consiste à analyser directement les différences d'amplitude - ou de tout autre attribut sismique - entre les diverses campagnes. L'interprétation est alors souvent étayée par une modélisation du comportement acoustique du sous-sol en fonction des modifications supposées des propriétés physiques de celui-ci. On trouvera un exemple de cette approche dans :
- Johnston, D., 2000, "Using legacy seismic data in an integrated time-lapse study : Lena Field, Gulf of Mexico", The Leading Edge, 19, n°3.

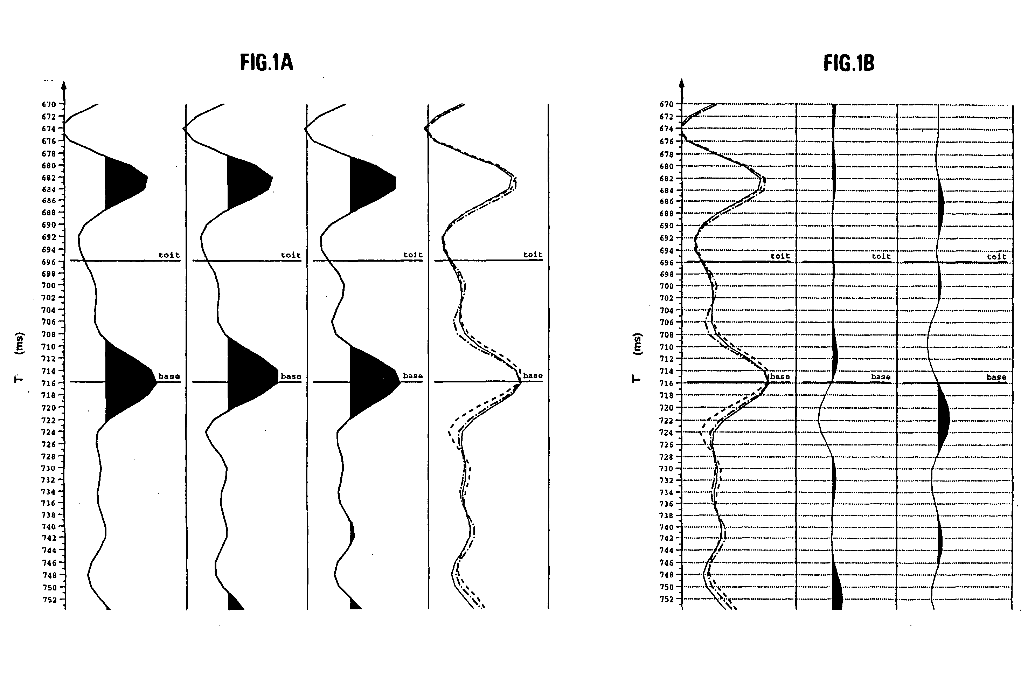

L'interprétation des données basée sur des différences d'amplitude (ou de tout autre attribut des traces) peut parfois s'avérer difficile. En effet, les variations des propriétés physiques de la roche au cours du temps liées par exemple à la production du gisement, à l'utilisation de méthodes de récupération assistée, etc., entraînent des variations de l'amplitude des traces sismiques au niveau du réservoir, mais aussi des décalages en temps de ces traces (allongement ou raccourcissement de la trace). La différence entre deux traces sismiques peut donc être difficilement interprétable puisqu'elle résulte non seulement de changement d'amplitude mais aussi de décalages en temps occultant ces variations d'amplitude comme on peut le voir sur l'exemple de la Figure 1.

Une autre approche consiste à utiliser des techniques statistiques de reconnaissance des formes qui permettent de classer les événements sismiques en diverses catégories, traduisant les différents états physiques du réservoir. Ces approches sont décrites, par exemple, dans :
- Dumay, J. Fournier, F., 1988, "Multivariate statistical analyses applied to seismic faciès récognition", Geophysics, 53, n° 9, pp. 1151-1159.

Leur application, dans le cas de l'interprétation de la sismique répétée, peut se faire sur les amplitudes sismiques des différentes campagnes sismiques, sur tout attribut dérivant de la trace sismique, ou sur des différences d'amplitude entre campagnes. Ces techniques de reconnaissance des formes peuvent être utilisées avec ou sans apprentissage, comme déjà décrites et mises en oeuvre dans le brevet FR 2 768 818 (US 6 052 651) et la demande de brevet FR 2 813 959, tous les deux au nom du demandeur.

Dans le cadre de la sismique répétée, on peut trouver un exemple de classification d'événements sismiques avec apprentissage, où l'apprentissage a été effectué en utilisant les données sismiques d'une première campagne et la classification appliquée indépendamment à cette première campagne puis à une campagne répétée, dans :
- Sonneland, L., Veire, H.F., Raymond, B., Signer, C., Pedersen, L., Ryan, S., Sayers, C., 1997, "Seismic réservoir monitoring on Gullfalks", The leading Edge, 16, n° 9, pp.1247-1252.

Afin de s'affranchir des artefacts liés au calcul des différences d'amplitude (ou au calcul des différences de tout autre attribut sismique), et pour analyser l'évolution des événements sismiques au cours du temps dans sa globalité, nous proposons une méthode permettant de classer ces événements en fonction de leur forme globale, tout en analysant simultanément dans un même ensemble les mesures sismiques issues des différentes campagnes.

### La méthode selon l'invention

La méthode selon l'invention et la revendication 1 a pour but de détecter les changements physiques subis au cours du temps par une zone du sous-sol, par analyse des changements observables dans des événements sismiques caractérisés chacun par des attributs sismiques, relevés à l'intérieur d'une fenêtre temporelle, sur les traces sismiques de plusieurs jeux de données obtenues respectivement au cours de campagnes sismiques successives (sismique répétée ou sismique dite 4D), comportant l'utilisation d'une technique de reconnaissance des formes pour classer les événements sismiques, caractérisée en ce qu'elle comporte :
- la formation d'un ensemble d'analyse regroupant tous les événements sismiques relevés sur les traces des différents jeux de traces sismiques, avec identification de chacun d'eux par sa position spatiale dans la dite zone et par le numéro du jeu de traces auquel il appartient ;
- la formation d'une base d'apprentissage comprenant plusieurs classes d'apprentissage regroupant chacune un certain nombre d'événements sismiques que l'on peut associer à des propriétés physiques communes ;
- la construction d'une fonction de classement calibrée sur les dites classes d'apprentissage définies ; et
- l'application à l'ensemble des événements sismiques, de la fonction de classement calibrée, de façon à attribuer au moins une partie des événements sismiques du dit ensemble aux différentes classes d'apprentissage.

La construction d'une fonction de classement calibrée est effectuée par exemple par une technique d'analyse discriminante, ou bien encore par une technique de réseaux neuronaux.

Suivant un mode de mise en oeuvre, on forme la base d'apprentissage par exemple à partir d'événements sismiques mesurés au voisinage de puits forés au travers de la formation étudiée, en définissant à partir d'eux des classes d'apprentissage correspondant à différentes natures de roche, ou à différents contenus fluides.

Suivant un autre mode de mise en oeuvre, on forme par exemple les classes d'apprentissage par une classification non supervisée des événements sismiques.

On peut utiliser en particulier les modes d'une fonction de densité de probabilité multivariée calculée à partir de l'ensemble des événements sismiques caractérisés par les attributs associés.

Suivant un autre mode de mise en oeuvre, on forme la base d'apprentissage en sélectionnant les traces sismiques dans les parties les plus représentatives des différents états physiques supposés de la première zone, et de leurs variations, obtenus par exemple avec un modèle numérique de simulation d'écoulement et de production.

Pour analyser les résultats, on peut, par exemple, créer des cartes de différences de classement en campagnes répétées, permettant de mieux mettre en évidence les changements de classe d'un événement sismique, et ce d'une campagne à une autre.

On peut ainsi détecter au cours du temps des changements dans la forme globale de la trace sismique, ou a contrario des stabilités des événements sismiques dans certaines zones qui sont soit hors d'atteinte des processus de récupération utilisés, soit sismiquement insensibles aux variations des états physiques du réservoir.

### Présentation succincte des figures

D'autres caractéristiques et avantages de la méthode selon l'invention, apparaîtront à la lecture de la description ci-après d'un exemple non limitatif de réalisation, en se référant aux dessins annexés où :
- la Fig. 1a montre un exemple d'événements sismiques enregistrés à trois campagnes sismiques différentes S1 S2 et S3 au niveau d'un réservoir mis en production entre les acquisitions S1 et S2 ; les «événements-différences» (modifications) entre campagnes sismiques sont présentés Figure 1b.
- la Fig.2 montre un schéma de principe de la classification de l'ensemble des événements sismiques dans l'espace généré par les attributs sismiques, ce schéma de principe étant illustré pour l'interprétation des deux premières campagnes sismiques S1 et S2 ;
- les Fig. 3a à 3c montrent les véritables projections des événements sismiques des campagnes S1, S2 et S3, analysées simultanément, dans l'espace des attributs sismiques, dont l'analyse conduit à trois cartes de classement, dont deux ont été représentées sur la figure 2 à titre d'illustration (celles concernant les campagnes S1 et S2) ; et
- la Fig. 4 présente la carte de différences des classements des événements sismiques, obtenues à partir des classements des campagnes S1 et S2.

### Description détaillée

Les événements sismiques que l'on cherche à classer sont constitués à partir de l'ensemble des traces sismiques issues des n campagnes de sismique 3D répétées, considérées au niveau du réservoir. Ces événements sismiques sont caractérisés par des attributs ou paramètres sismiques extraits des différents enregistrements de la sismique répétée, au niveau de la zone cible du sous-sol, le plus souvent un réservoir d'hydrocarbures. La méthodologie de définition des classes comporte les étapes suivantes :
a) La première étape est une étape de définition des classes d'apprentissage. Cette étape se fait par l'analyse simultanée des événements sismiques disponibles sur l'ensemble des campagnes. Une première possibilité est d'extraire les événements sismiques enregistrés au voisinage de puits, et dont l'interprétation géologique - ainsi que l'évolution au cours du temps de cette interprétation - a été effectuée. Cette méthodologie permettra alors de classer l'ensemble des événements sismiques en fonction de variations géologiques observées au niveau des puits. La deuxième possibilité consiste à effectuer une analyse non supervisée de l'ensemble des événements sismiques enregistrés au cours des différentes campagnes, en utilisant, par exemple, la technique décrite dans le brevet FR 2 768 818 (US 6 052 651) précité. D'autres possibilités existent, comme par exemple de définir les classes d'apprentissage en se servant d'une modélisation mathématique des états physiques attendus au niveau du réservoir, et ce compte tenu des variations engendrées par sa production. Le point à souligner dans notre approche est qu'ici les événements sismiques sont considérés et analysés simultanément sur l'ensemble des campagnes.
b) La deuxième étape consiste à calibrer une fonction de classement à partir des événements sismiques sélectionnés à l'étape précédente pour représenter les classes d'états physiques considérées. Ce calibrage peut se faire, par exemple, par analyse discriminante.

Une fois cette fonction de classement établie, elle est exploitée au cours de la troisième étape pour attribuer les événements sismiques de l'ensemble des campagnes aux différentes classes considérées à l'étape précédente, et créer ainsi pour chaque campagne une carte de classement de ses événements sismiques.

On peut enfin créer des cartes de différences de faciès sismiques d'une campagne à l'autre afin de détecter les changements d'affectation de certaines traces sismiques au cours du temps.

Les diverses étapes de la méthode sont clairement illustrées par les figures.

Afin de suivre les modifications physiques au niveau du réservoir liées aux mécanismes de production, trois campagnes sismiques ont été enregistrées : la première avant la mise en production, et les deux autres, plusieurs mois après le début de la production. Ces modifications sont analysées au niveau d'une fenêtre temporelle constante de 20 ms représentée sur les Figures 1a et 1b. Cette fenêtre temporelle correspond approximativement à la zone réservoir. Les événements sismiques analysés sont alors les morceaux de traces sismiques qui peuvent être extraits de chacun de ces volumes de données, au niveau de cette fenêtre. Les attributs utilisés pour représenter ces événements sont les valeurs des amplitudes échantillonnées sur les 11 pas de temps successifs inclus dans la fenêtre de 20 ms.

L'observation attentive des Fig. 1a et 1b met en évidence, pour une position spatiale particulière, que les variations des événements à cette position suivant les trois campagnes de mesure concernent à la fois leur amplitude et leur forme. Le simple calcul d'un « événement-différence » qui est le résultat d'une soustraction des valeurs des attributs de deux événements appartenant à deux campagnes différentes, mais localisés au même endroit, (« événements- différence » qui sont représentés sur la Figure 1b) ne permet pas de prendre en compte fidèlement ces variations d'amplitude et de forme, ces dernières étant liées à des variations de temps de trajet de l'onde sismique. Pour une analyse pertinente, il faut donc comparer les événements de l'ensemble des campagnes, les uns par rapport aux autres, en les étudiant dans leur globalité pour intégrer dans l'analyse les deux types de variations.

Les classes d'apprentissage, censées représenter les différents états physiques du réservoir, ont été définies à partir de la fonction de densité de probabilité multivariée calculée sur l'ensemble des événements des trois campagnes sismiques S1 à S3, dans un espace engendré par les 11 attributs sismiques précédemment mentionnés. On choisit les échantillons d'apprentissage des classes en sélectionnant les événements appartenant aux pics de forte valeur de la fonction de densité.

On établit ensuite une fonction de classement des événements à l'aide, par exemple, d'une analyse discriminante calibrée sur les classes d'apprentissage.

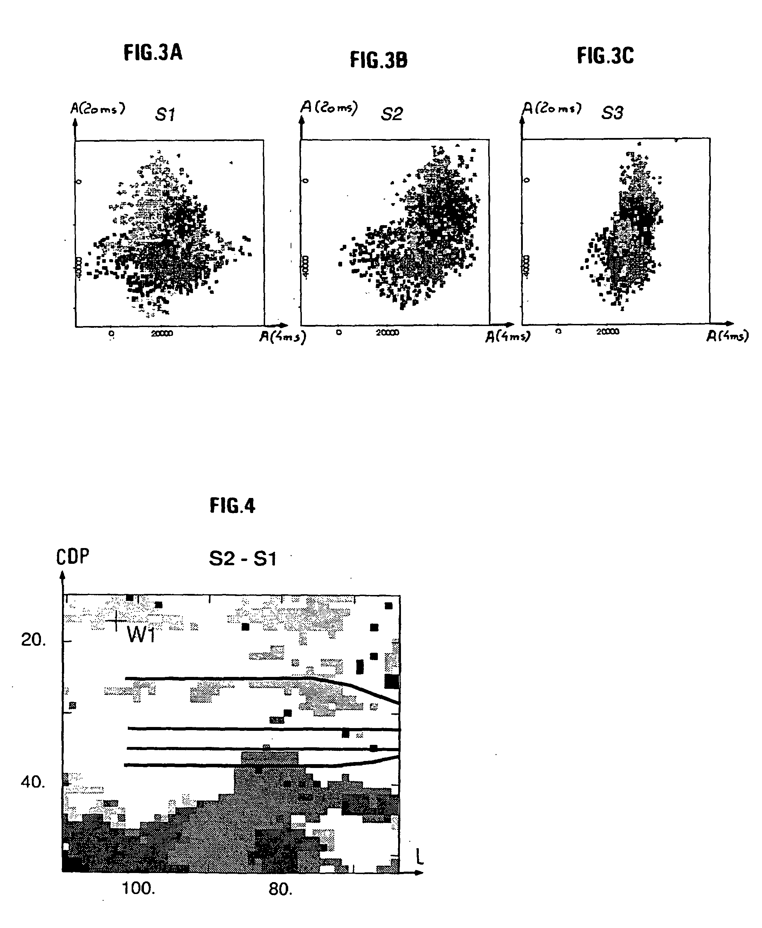

Cette fonction de classement est alors appliquée à l'ensemble des événements sismiques des trois campagnes S1, S2, S3 pour les affecter à l'une des classes d'apprentissage. Les différentes classes résultant de cette affectation peuvent se visualiser dans des plans de l'espace des attributs sismiques, comme sur les Fig. 3a à 3c, où l'on voit le plan engendré par l'amplitude du toit dans la fenêtre centrée sur le réservoir (A(20ms)) en fonction de l'amplitude située 4 ms au-dessus de la base du réservoir (A(4ms)). Ce plan est visualisé trois fois (Fig.3a à 3c), pour faire apparaître séparément les classements des événements appartenant respectivement aux trois campagnes sismiques considérées, S1, S2 et S3. Cependant, dans l'espace des attributs, les événements ont été classifiés simultanément, ils ne sont distingués par campagne que pour faciliter la visualisation des classes et leur évolution en fonction du temps, c'est à dire en fonction de leur appartenance aux différentes campagnes sismiques S1, S2 et S3.

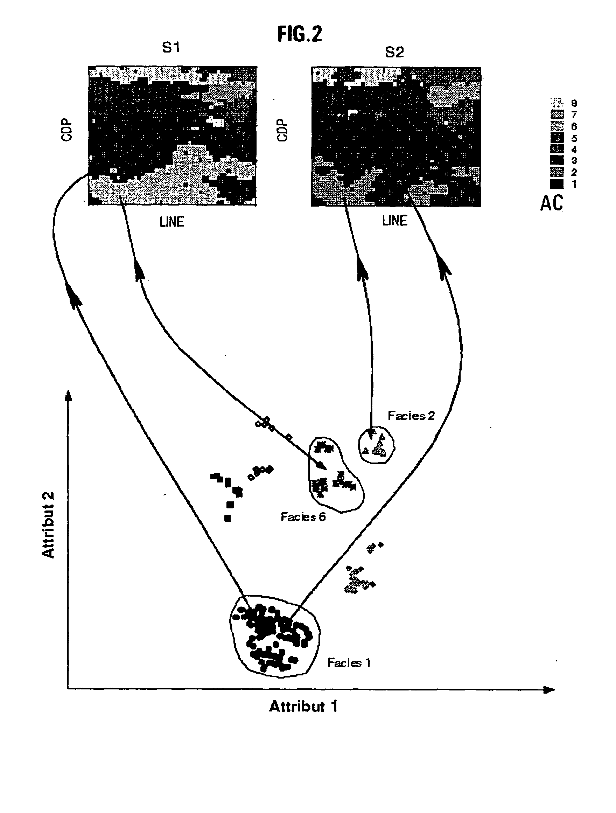

Les résultats pour les campagnes S1 (avant mise en production du réservoir) et S2 (première campagne après la mise en production) sont aussi présentés sous forme de cartes de classes Figure 2, qui traduisent les états physiques du réservoir et leur évolution au cours du temps (entre S1 et S2). Ainsi, on observe que si la bordure nord du réservoir n'est pas affectée par la mise en production (même répartition des classes entre les campagnes S1 et S2), la partie sud se caractérise par la disparition d'une classe entre S1 et S2, compensée par l'apparition d'une nouvelle classe principalement dans la zone sud-ouest, et l'extension spatiale d'une des classes principales de la carte associée à S1. Ces évolutions se retrouvent bien sûr sur les plans des Fig.3a à 3c concernant les campagnes S1 et S2.

Une interprétation de ces cartes peut se faire également en analysant les changements d'affectation aux classes des événements d'une campagne à l'autre. On peut ainsi présenter les résultats sous forme de carte de différences de classes telle que celle de la Fig. 4 pour les différences entre les campagnes S1 et S2, où les zones blanches correspondent aux zones dans lesquelles l'affectation des événements à une classe n'a pas changé, contrairement aux zones teintées. Les changements sont principalement distribués dans la partie sud du réservoir.

## Revendications

1. Méthode pour détecter les changements physiques subis au cours du temps par une zone du sous-sol, par analyse des changements observables dans des événements sismiques **caractérisés** chacun par des attributs sismiques, relevés à l'intérieur d'au moins une fenêtre temporelle, sur les traces sismiques de plusieurs jeux de traces sismiques obtenues respectivement au cours de campagnes sismiques successives, comportant l'utilisation pour classer les événements sismiques d'une technique de reconnaissance des formes avec formation d'une base d'apprentissage multi-classes et construction d'une fonction de classement applicable aux événements sismiques, **caractérisée en ce qu'**elle comporte :
- la formation d'un ensemble d'analyse regroupant tous les événements sismiques relevés sur les traces des différents jeux de traces sismiques obtenues à l'issue des différentes campagnes sismiques, avec identification de chacun d'eux par sa position spatiale dans la dite zone et par le numéro du jeu de traces auquel il appartient ;
- la formation d'une base d'apprentissage comprenant plusieurs classes d'apprentissage regroupant chacune un certain nombre d'événements sismiques disponibles sur l'ensemble de campagnes sismiques successives que l'on peut associer à des propriétés physiques communes ;
- la construction d'une fonction de classement calibrée sur les dites classes d'apprentissage définies ; et
- l'application à l'ensemble des événements sismiques disponibles sur l'ensemble de campagnes sismiques successives, de la fonction de classement calibrée, de façon à attribuer au moins une partie des événements sismiques du dit ensemble aux différentes classes d'apprentissage.

2. Méthode selon la revendication 1, **caractérisée en ce que** la construction d'une fonction de classement calibrée, est effectuée par une technique d'analyse discriminante.

3. Méthode selon la revendication 1, **caractérisée en ce que** la construction d'une fonction de classement calibrée, est effectuée par une technique de construction de réseaux neuronaux.

4. Méthode selon l'une des revendications précédentes, dans laquelle on forme la base d'apprentissage à partir d'événements sismiques mesurés au voisinage de puits forés au travers de la formation étudiée, en définissant à partir d'elles des classes d'apprentissage correspondant à différentes natures de roche, ou à différents contenus fluides.

5. Méthode selon l'une des revendications précédentes, **caractérisée en ce que** les classes d'apprentissage sont formées à partir d'événements sismiques relevés sur des traces sismiques au voisinage de puits au travers de la formation.

6. Méthode selon l'une des revendications précédentes, **caractérisée en ce que** les classes d'apprentissage sont formées par une classification non supervisée.

7. Méthode selon l'une des revendications précédentes, **caractérisée en ce que** les classes d'apprentissage sont formées en utilisant un modèle physique des états attendus au niveau de la dite zone souterraine.

## Patentansprüche

1. Verfahren zum Detektieren der physikalischen zeitlichen Änderungen, die durch eine unterirdische Zone auferlegt werden, durch Analyse der Änderungen, die bei seismischen Ereignissen zu beobachten sind, jede **gekennzeichnet durch** seismische Attribute, die in wenigstens einem Zeitfenster auftreten, auf den seismischen Spuren mehrerer Sätze von seismischen Spuren, die jeweils im Laufe aufeinander folgender seismischer Kampagnen erhalten werden, umfassend die Verwendung einer Erkennungstechnik der Formen zum Klassifizieren der seismischen Ereignisse mit Bildung einer mehrklassigen Lernbasis (learning base) und Konstruktion einer Klassifizierungsfunktion, die auf die seismischen Ereignisse anwendbar ist, **dadurch gekennzeichnet, dass** sie umfasst:
- die Bildung eines Analyseaufbaus, welcher alle seismischen Ereignisse gruppiert, die auf den Spuren verschiedener seismischer Spurensätze auftreten, welche aus den verschiedenen seismischen Kampagnen erhalten werden mit Identifizierung von jeder unter ihnen **durch** ihre Raumposition in der Zone und **durch** die Nummer des Satzes von Spuren, zu denen sie gehört;
- die Bildung einer Lernbasis (learning base), die mehrere Lernklassen umfasst, die jede eine bestimmte Anzahl seismischer Ereignisse gruppiert, die in der Anordnung von seismischen, aufeinander folgenden Kampagnen verfügbar sind, welche man gemeinsamen physikalischen Eigenschaften zuordnen kann;
- die Konstruktion einer Klassifizierungsfunktion, die auf den definierten Lernklassen kalibriert ist; und
- die Anwendung auf die Gesamtheit von seismischen verfügbaren Ereignissen auf die Gesamtheit von seismischen aufeinander folgenden Kampagnen, von der kalibrierten Klassifizierungsfunktion derart, dass wenigstens ein Teil der seismischen Ereignisse der Gesamtheit den verschiedenen Lernklassen zugeordnet wird.

2. Verfahren nach Anspruch 1, **dadurch gekennzeichnet, dass** die Konstruktion einer kalibrierten Klassifizierungsfunktion durch eine Diskriminierungs-Analysetechnik durchgeführt wird.

3. Verfahren nach Anspruch 1, **dadurch gekennzeichnet, dass** die Konstruktion einer kalibrierten Klassifizierungsfunktion durch eine Technik zur Konstruktion eines neuronalen Netzes durchgeführt wird.

4. Verfahren nach einem der vorhergehenden Ansprüche, bei dem man eine Lernbasis (learning base) aus seismischen Ereignissen bildet, die in der Nähe von Bohrlöchern gemessen werden können, die durch die untersuchte Funktion gebohrt sind, unter Definition ausgehend von ihnen von Lernklassen, die verschiedenen Felseigenschaften oder verschiedenen enthaltenen Fluiden entsprechen.

5. Verfahren nach einem der vorhergehenden Ansprüche, **dadurch gekennzeichnet, dass** die Lernklassen aus seismischen Ereignissen gebildet werden, die auf den seismischen Spuren in der Nähe von Bohrlöchern durch die Formation auftreten.

6. Verfahren nach einem der vorhergehenden Ansprüche, **dadurch gekennzeichnet, dass** die Lernklassen durch eine lichtüberwachte Klassifizierung gebildet werden.

7. Verfahren nach einem der vorhergehenden Ansprüche, **dadurch gekennzeichnet, dass** die Lernklassen unter Verwendung eines physikalischen Modells der auf der Ebene der unterirdischen Zone erwarteten Zustände gebildet werden.

## Claims

1. Method for detecting the physical changes undergone over time by a sub-surface zone, by analysis of the changes observable in seismic events each **characterised by** seismic attributes, highlighted within at least one time window, on the seismic traces of a plurality of sets of seismic traces obtained respectively in the course of successive seismic campaigns, including the use for classification of the seismic events of a form recognition technique with formation of a multi-class learning base and construction of a classification function applicable to the seismic events, ***characterised by** the fact that* it includes:
- formation of an analysis population grouping all the seismic events highlighted on the traces of the different sets of seismic traces obtained on conclusion of the different seismic campaigns, with identification of each of them by its spatial position in the said zone and by the number of the set of traces to which it belongs;
- formation of a learning base comprising a plurality of learning classes each grouping a certain number of seismic events available from all the successive seismic campaigns which can be associated with common physical properties;
- construction of a classification function calibrated to the said defined learning classes; and
- application of the calibrated classification function to the population of seismic events available in all the successive seismic campaigns, so as to allocate at least a part of the seismic events of the said population to the different learning classes.

2. Method as described in claim 1, ***characterised by** the fact that* the construction of a calibrated classification function is effected by a discriminating analysis technique.

3. Method as described in claim 1, ***characterised by** the fact that* the construction of a calibrated classification function is effected by a neural network construction technique.

4. Method as described in one of the preceding claims, in which the learning base is formed from seismic events measured in the vicinity of wells drilled through the formation studied, defining from them learning classes corresponding to different rock natures or to different fluid contents.

5. Method as described in one of the preceding claims, ***characterised by** the fact that* the learning classes are formed from seismic events highlighted on seismic traces in the vicinity of wells through the formation.

6. Method as described in one of the preceding claims, ***characterised by** the fact that* the learning classes are formed by non-supervised classification.

7. Method as described in one of the preceding claims, ***characterised by** the fact that* the learning classes are formed using a physical model of the states expected at the level of the said sub-surface zone.
